# EUROPEAN PATENT SPECIFICATION

(11) **EP 1 668 799 B1**
(45) Date of publication and mention of the grant of the patent: **02.01.2013**
(21) Application number: 04774693.8
(22) Date of filing: 23.09.2004
(51) Int. Cl.: H04B 7/26

(54) **SIGNALING METHOD OF TRANSPORT FORMAT COMBINATION**
SIGNALISIERUNGSVERFAHREN ZUM KOMBINIEREN DES TRANSPORTFORMATS
PROCEDE DE SIGNALISATION DE COMBINAISON DE FORMAT DE TRANSPORT

(30) Priority: 02.10.2003 KR 2003068926
(43) Date of publication of application: 14.06.2006
(73) Proprietor: LG Electronics Inc., Seoul 150-721 (KR)
(72) Inventor: KIM, Bong, Hoe, Bono-dong Ansan-si, Gyeonggi-do 426-180 (KR); AHN, Joon, Kui, Dongjak-gu Seoul 156-781 (KR)
(74) Representative: TER MEER - STEINMEISTER & PARTNER GbR
(86) International application number: PCT/KR2004/002440
(87) International publication number: WO 2005/032008

(56) References cited:
- EP-A1- 1 349 312
- WO-A2-01/17283
- WO-A2-03/034600

## Description

### Technical Field

The present invention relates to a communication system, and more particularly to an uplink Transport Format Combination (TFC) signaling method of a receiving Node-B in, for example, a W-CDMA (Wideband-Code Division Multiple Access) communication system.

### Background Art

Current mobile communication systems use an uplink Dedicated Channel (DCH) to send data from a User Equipment (UE) to a Node B. The information (data) transmitted via the DCH is voice data. See, for example, JUHUA KORHONEN, INTRODUCTION TO 3G MOBILE COMMUNICATIONS SYSTEMS (2nd ed. 2003).

In the above-described telecommunication system, a base station is referred to as a Node B, and a mobile terminal, subscriber unit, etc. is referred to as a User Equipment (UE). Further, a Node B (base station) that is in control of UEs is referred to as a scheduling Node B.

The scheduling Node B is responsible for informing the UE(s) at what transmission rate data may be transmitted and also when the data may be transmitted (packet transmit time). Upon receiving the instructions from the Node B, the UE may then transmit, via the DCH, data within the data rate range and at the transmit time provided by the scheduling Node B.

In this way, the scheduling Node B is able to control a plurality of UEs so as to maximize the use of uplink radio resources. That is, the scheduling Node B can ensure that uplink interference caused by multiple UEs transmitting data simultaneously is within a manageable range. For example, if all of the UEs controlled by the scheduling Node B were to transmit data simultaneously, the total uplink interference may be severe enough to cause multiple transmission failures. Thus, the scheduling Node B effectively manages the time and data rate/power at which the UEs may transfer data.

A next generation mobile communication systems is proposing the use an E-DCH (Enhanced Uplink Dedicated Channel) to provide high-speed data communication for packet data and other types of high burst traffic data. However, the standards for the E-DCH have not been established.

EP 1 349 312 A1 describes an error rate of a TFCI of a transmission data format, and when an error rate of the TFCI becomes worse, a request to increase only the power of the TFCI is issued to the transmitter. The error rate of the TFCI is computed from the error detection result of a TrCH. Especially when the data length of the TrCH is relatively short, this method is not applied, but wasteful power consumption increases. When the data length of the TrCH is long, this method is applied to realize error rate control with the wasteful power consumption minimized. Further, TFCI = 0 for no signals is disclosed.

WO 03/034600 A2 achieves power savings by turning off all or some of the baseband processing for codes and timeslots that have not been transmitted due to full or partial DTX. With respect to partial DTX, the transmitted codes and associated timeslots and radio frames within the shortest TTI in the CCTrCH are determined from the received TFCI. Thereafter, the receiver is turned off for the unused codes as indicated by the received TFCI. With respect to full DTX, following TFCI reception, the receiver is turned off for all timeslots within the shortest TTI.

WO 01/17283 A2 describes a calculated Transport Format Combination (CTFC), that provides efficient signalling of transport format combinations to be assigned TFCI values. A sequence of CTFCs is signaled from higher layers to Node B and the user equipment (UE), where each CTFC in order is allocated a TFCI value. From the CTFC both Node B and the user equipment (UE) can determine the exact transport format combinations the TFCI values (used to communicate between Node B and UE) represent. The sequence of CTFC values includes only CTFC values for valid combinations of transport formats.

### Disclosure of Invention

Accordingly, one object of the present invention to address at least the above-noted and other problems.

Another object of the present invention is to define standards for the E-DCH.

Yet another object is to provide a novel Transport Format Combination Indicator (TFCI) transmitting method. The objects are solved by the features of the independent claim.

To achieve these objects and other advantages and in accordance with the purpose of the invention, as embodied and broadly described herein, the present invention provides a novel method of communicating between a User Equipment (UE) and at least one Node B including transmitting from the UE to the at least one Node B a Transport Format Combination Indicator (TFCI) enabling the Node B to acknowledge no data exists in a radio frame when no data is transmitted in the radio frame.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### Brief Description of Drawings

The invention will be described in detail with reference to the following drawings in which like reference numerals refer to like elements, wherein:
Figure 1 illustrates radio frames according to a first example of the present invention;
Figure 2 is an overview illustrating the relationship between logical channels, transport channels and physical channels;
Figure 3 is an overview explaining Transport Formats (TFs), Transport Format Sets (TFS), Transport Format Combinations (TFCs) and Transport Format Combination Sets (TFCS);
Figure 4 is an overview illustrating the concept of Transport Format Combination Indicators (TFCIs);
Figure 5 is an overview of a UE in soft handover (SHO) with a plurality of Node Bs;
Figure 6A illustrates radio frames when a UE is in SHO with a plurality of Node Bs according to one example of the present invention;
Figure 6B illustrates radio frames when a UE is not in SHO with a plurality of Node Bs according to one example of the present invention;
Figure 7 illustrates radio frames according to another example of the present invention;
Figure 8A illustrates radio frames when a UE is in SHO with a plurality of Node Bs according to another example of the present invention; and
Figure 8B illustrates transmitted radio frames when a UE is not in SHO with a plurality of Node Bs according to yet another example of the present invention.

### Best Mode for Carrying Out the Invention

Referring now to the drawings, wherein like reference numerals designate identical or corresponding parts throughout the several view, the present invention will be described.

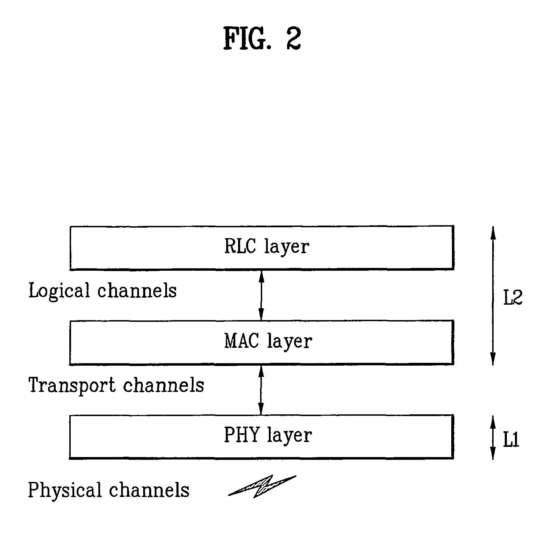

As shown in Figure 2, a transport channel is a concept applied to the interface between the Physical layer and the MAC layer. The transport channels are used by the MAC layer to access the Physical layers. In addition, Physical layers use 10ms radio frames, for example, which are fixed in size and are filled with information from the MAC layer. The MAC layer generates a new transport block every 10ms, fills it with the necessary information and sends it to the Physical layer. Note that a set of simultaneously transport blocks is called a transport block set. Also, a transport block size indicates the size of the transport block in bits, and a transport block set size indicates the size of the transport block set. A Transmission Time Interval (TTI) indicates the inter-arrival time of transport block sets- i.e., how often the MAC layer sends data to the Physical layer (e.g., 10ms, 20ms, 40ms or 80ms).

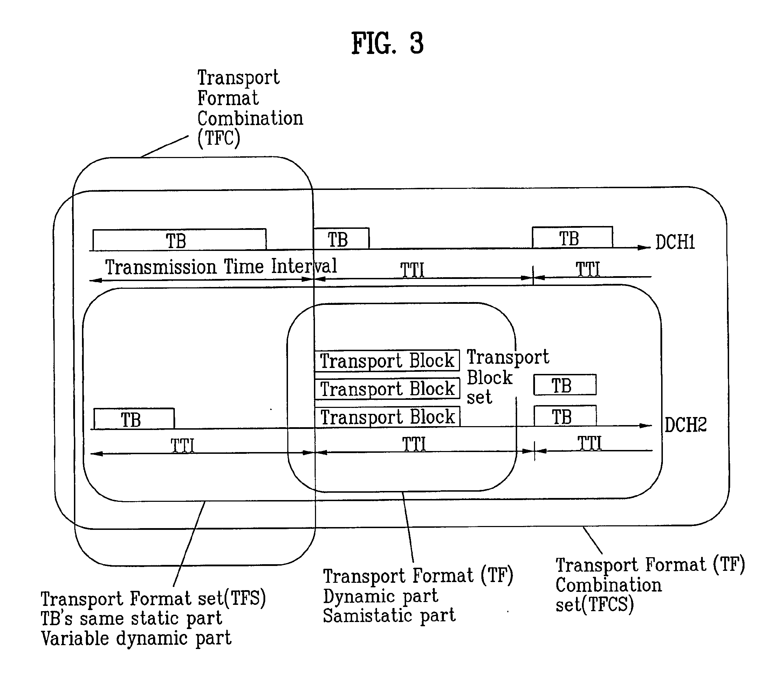

Figure 3 illustrates the concepts of TTI, transport blocks and transport block sets.

The "transport format" defines the data in the transport block set and how the Physical layer should handle it. Further, the transport format includes two parts: a semistatic part and a dynamic part. The semistatic part definitions are common to all transport formats in a transport channel and define service attributes such as the quality and transfer delay for the data transfer. The semistatic part definitions include the TTI, type of error protection scheme, size of the CRC, and static rate matching parameter, for example. The dynamic part definitions can be different for every transport format and includes the transport block size and transport block set size.

An example of a transport format is:
Semistatic part: {10ms, turbo coding, static rate matching parameter =1}
Dynamic part: {320 bits, 640 bits}

Note the Dynamic part includes definitions for the transport block size and the transport block set size (i.e., 320 bits and 640 bits respectively). The semistatic part also includes the definitions noted above.

Now that the "transport format" is defined, this discussion will move to "transport format sets" (TFS) and "transport format combination set" (TFCS). All transport formats associated with a single transport channel form a transport format set. See Figure 3. Further, several transport formats on different channels can exist simultaneously, each possibly having different transport characteristics. These different transport channels are multiplexed together into a Coded Composition Transport Channel (CCTrCH). The collection of transport formats used in the CCTrCH is called a transport format combination. A transport format combination set is defined as the set of all transport format combinations. Figure 3 illustrates the concepts of the Transport Format (TF), Transport Format Set (TFS), Transport Format Combination (TFC) and Transport Format Combination Set (TFCS). Note two transport channels are illustrated in Figure 3 (DCH1 and DCH2). However, any number of channels may be included. Further, Figure 3 shows one Transport Format Combination with a solid line surrounding the collection of transport formats on transport channels DCH1 and DCH2. Note, however, Figure 3 also shows two other transport format combinations, but these combinations are not outlined. The shown transport format combination set includes the three transport format combinations. A separate TFCI identifies each of the TFCS.

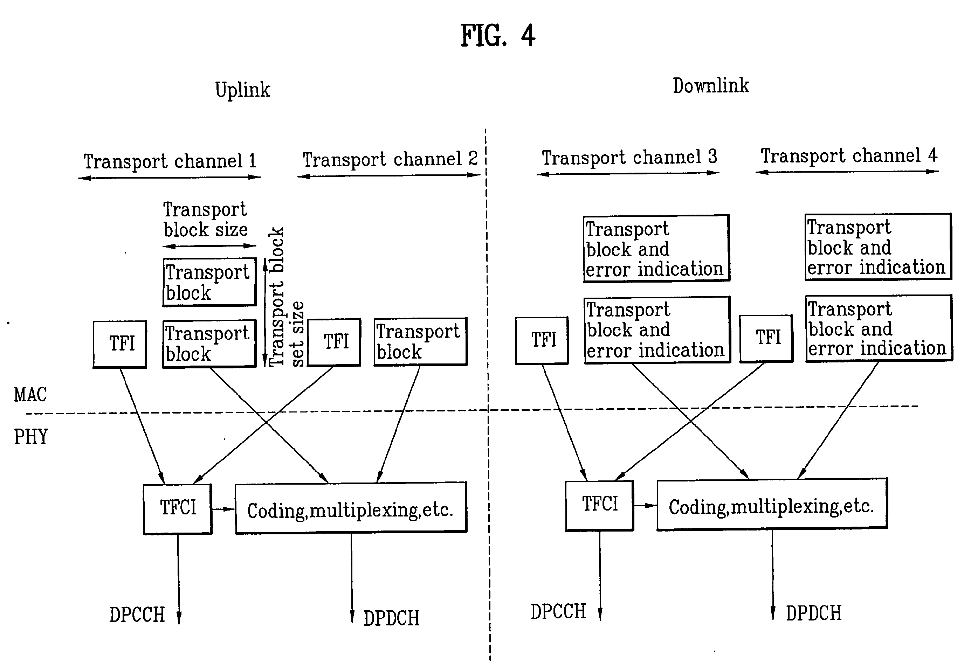

Note also that each TF within a transport format set is identified by a Transport Format Indicator (TFI), and the TFC is identified by a Transport Format Combination Indicator (TFCI). In more detail, Figure 4 illustrates the concepts of the TFI and TFCI (as well as transport block size and transport block set size). Note the TFI is used in the interlayer communication between the MAC layer and Physical layer to indicate the transport format.

Further, each of the UE and Node B includes a data table, for example, of the possible different combinations of TFCs. The possible number of combinations allowed may be preset by the mobile communications company and thus can be stored in the UEs and node Bs. Thus, the Node B/UE need only transmit a TFCI, which is an index pointing to the proper TFC in the respective data table. Therefore, only the TFCI has to be transmitted verses transmitting all of the transport format information to define a TFC.

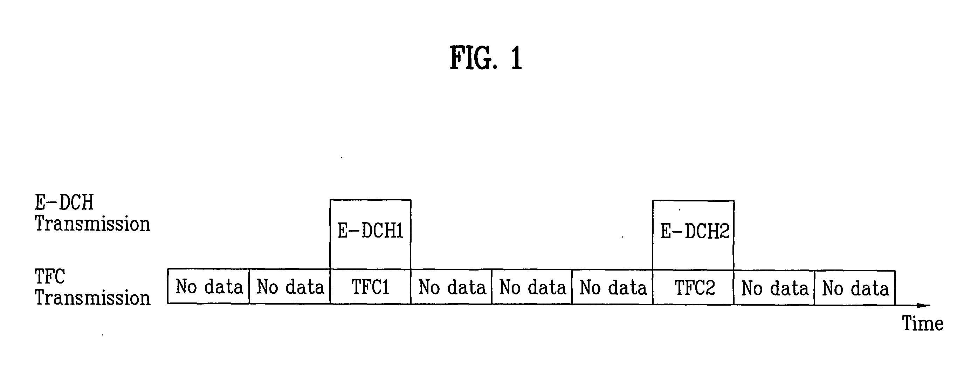

Now turning back to Figure 1. As shown, a TFCI corresponding to "No Data" is transmitted during a radio frame in which no data is transmitted. Thus, in this example, each Node B and UE would have an entry in a TFCI data table corresponding to "No Data." Further, as shown in Figure 1, when data is transmitted, an appropriate TFCI is included that defines the type of transport formats in the TFCs for that data.

Transmitting TFCIs corresponding to "No Data" advantageously reduces the load on the receiving Node B. In more detail, if a TFCI is not transmitted (i.e., nothing is transmitted), the Node B will decode empty TFCI fields and will attempt to decode data in every radio frame with the wrongly decided TFCI value, and then it will process a Cyclic Redundancy Code (CRC) attached to data, which results in an error being generated. This disadvantageously affects open-loop power control processing. In more detail, upon determining a CRC error, the Node B informs a Radio Network Control (RNC) upper layer about the detection of the CRC error. Then, the RNC will try to increase the Signal to Interference Ratio (SIR) eventually causing the UE to increase its transmission power (e.g., because a CRC error was received, the RNC determines that the UE is not transmitting with enough power so instructs the UE to increase its transmitting power). The increase in transmission power by the UE results in a greater uplink interference (e.g., the greater the uplink transmission power, the greater the interference). Thus, transmitting a TFCI corresponding to "No Data" advantageously reduces the load on the Node B and prevents an increase in uplink interference.

Further, in the communication system using a DCH, the data transmitted was primarily voice data, which was transmitted during most of the radio frames. That is, with voice data, there is not large period of times of no transmission, and thus there was not as much concern about the load on the Node B during non-transmission periods (e.g., because there were not many non-transmission periods).

However, in E-DCH, the data transmitted is expected to generally include high-burst traffic data (such as MPEG files, etc) in which data is transmitted at high data rates in a short period of time. Thus, periods in which no data is transmitted is likely greater than with voice data. Therefore, the present invention includes TFCIs corresponding to "No Data" to thereby advantageously reduce the load on the Node B and prevent an increase in uplink interference.

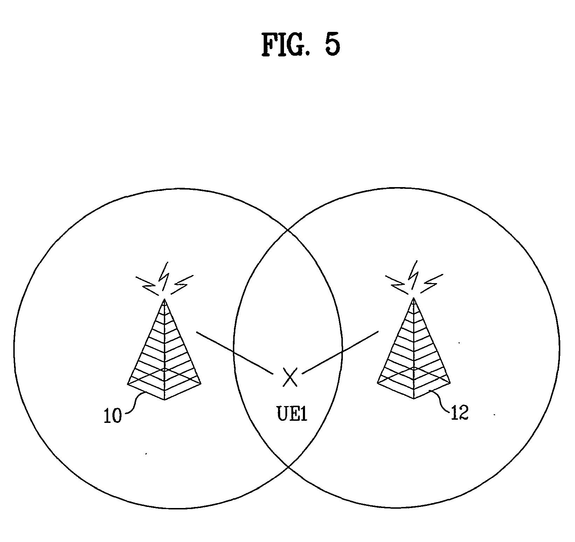

Turning now to Figure 5, which illustrates an example of UE1 in SHO with a plurality of Node Bs (e.g., Node Bs 10 and 12). In this example, the scheduling Node B is Node B 10 as illustrated by the highlighted bold Node B.

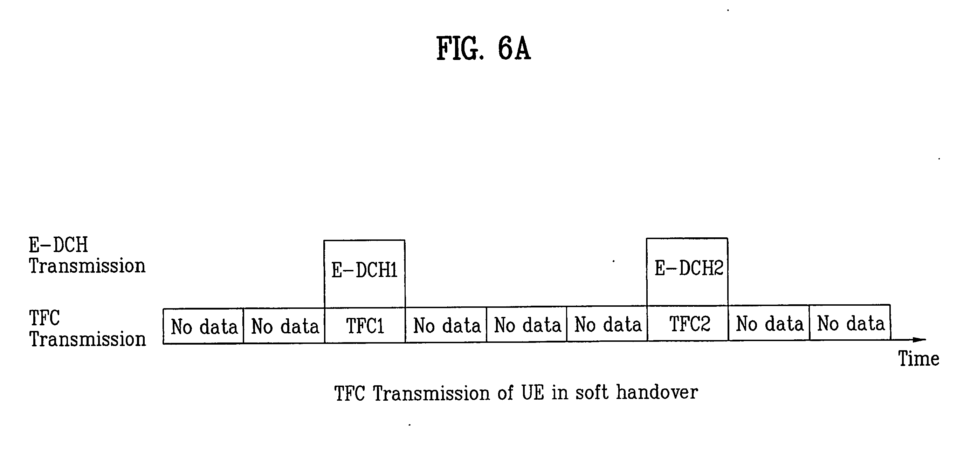

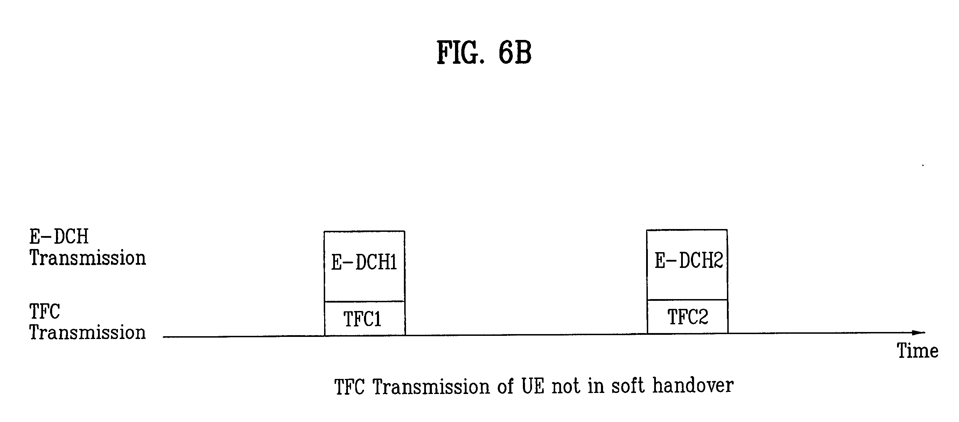

The following Figures 6A and 6B address the situation in which a UE is in SHO and when the UE is not in SHO, respectively. In more detail, as shown in Figure 6A and 6B, the present invention includes a TFCI corresponding to "No Data" when the UE is in SHO with a plurality of Node Bs (see Figure 6A) and does not include a TFCI corresponding to "No Data" when the UE is not in SHO with a plurality of Node Bs (see Figure 6B). Note that Figure 1 is the same as Figure 6A. However, Figure 1 illustrates the situation in which SHO is not considered. That is, the transmission frame related to the situation in Figure 1 is transmitted regardless of whether or not the UE is SHO. Figures 6A and 6B distinguish between the SHO and non-SHO states. However, because the UE is not in SHO with multiple Node Bs, the overall negative effects are minimized. That is, because in the non-SHO case, only the scheduling Node B receives uplink data from the UE and thus the Node B may roughly predict the UE's uplink transmission (since it schedules the uplink transmission of the UE). Thus, the advantage of not transmitting TFCIs of "No Data" as shown in Figure 6B, is that the UE saves battery power because it is not transmitting TFCIs during each radio frame and also uplink interference can be reduced.

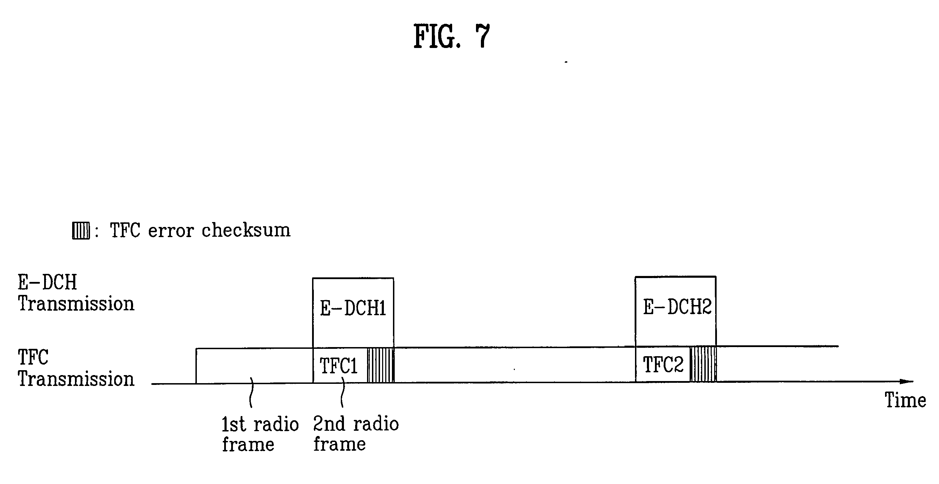

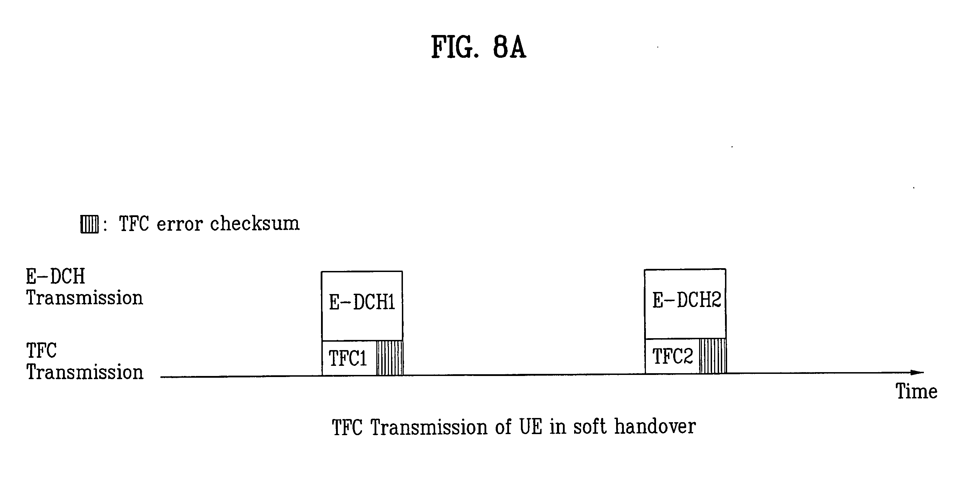

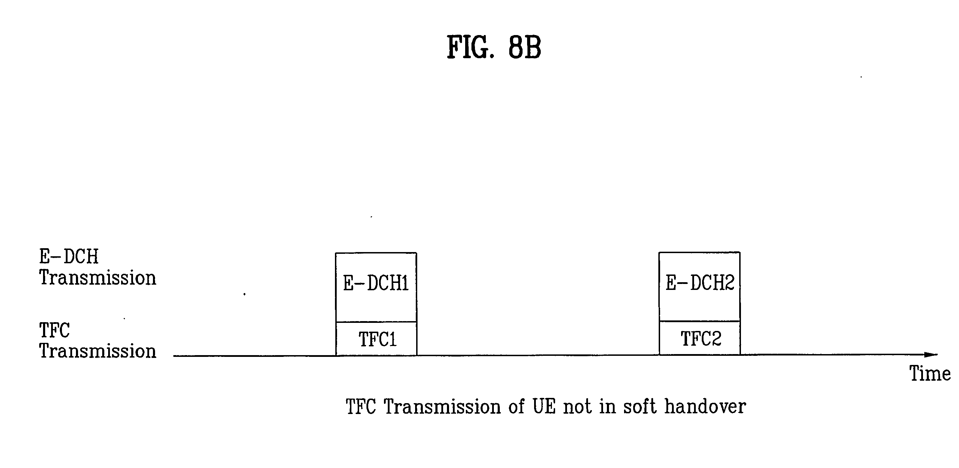

Turning next to Figures 7, 8A and 8B. Figure 7 illustrates an example of radio frames according to the present invention without consideration of whether or not a UE is in SHO, and Figures 8A and 8B distinguish between when the UE is in SHO with a plurality of Node Bs (Figure 8A) and when the UE is not in SHO with a plurality of Node Bs (Figure 8B).

As shown in Figure 7, the TFCI includes an error checksum (such as a CRC) enabling the Node B to determine if there is an error in receiving the TFCI. Thus, according to the present invention, the result of the error checksum is advantageously used to determine whether or not data is transmitted. In more detail, upon receiving the transmitted radio frame(s), the Node B will perform error processing on each transmitted frame. Note in Figure 7, the first radio frame does not include data (and thus does not include a TFCI nor an error checksum) and the second radio frame includes data and includes a TFCI and corresponding checksum. Thus, for radio frame 1, the Node B would determine an error exist in the TFCI field, because the Node B will perform error processing on the TFCI field which does not include an error checksum. Thus, in this example, the Node B determines that no data is being transmitted by performing error checksum processing. That is, performing CRC processing on the TFCI field of the first radio frame will result in an error being generated (because there is no CRC) and this generated error is used to indicate that no data has been transmitted. For radio frame 2, the Node B performs error processing of the TFCI and determines no error exists. Thus, in this example, the Node B is able to determine whether or not data exists by performing error processing.

Note in Figure 1, a TFCI of "No Data" was used to signify no data is being transmitted (and minimal processing was required to decode the TFCI corresponding to No Data). In Figure 7, a TFCI of "No Data" is not transmitted, but rather CRC error processing is used to determine no data is transmitted. Thus, in Figure 7, the UE can save power because it is not transmitting TFCIs for each radio frame, thereby also reducing the uplink interference. However, both of the methods in Figure 1 and 7 significantly reduce the uplink interference and processing requirements compared to when the Node B performs the complex processing of attempting to completely decode data.

Turning next to Figures 8A and 8B, which illustrate examples of transmitted radio frames for the situations in which a UE is in SHO with multiple Node Bs and when a UE is not in SHO with multiple Node Bs, respectively. In more detail, Figure 8A illustrates transmitting an error checksum along with the TFCI when data is transmitted and the UE is in SHO. Thus, in this example, each Node B in SHO with the UE can perform error processing on the transmitted radio frames to determine whether or not data is transmitted (as discussed above with respect to Figure 7).

Thus, according to the present invention, when the UE is in SHO, each Node B performs minimal error processing to determine whether or not data is transmitted, thereby reducing the uplink interference caused to the Node Bs (scheduling and non-scheduling Node Bs), and the processing requirements (loads) of the Node Bs.

Figure 8B illustrates an example of when an error checksum is not provided with the TFCI when the UE is not in SHO with multiple Node Bs. Thus, in this example, a TFCI and error checksum is not transmitted. Therefore, the UE saves power because it doesn't have to transmit a TFCI and error checksum data, and also by not transmitting TFCI and error checksum data, the uplink interference is reduced. That is, transmitting checksum error data requires more transmit power from the UE, which results in more interference.

The
Document (Tdoc) R1-040758, presented during the TSG-RAN Working Group 1, June 21-24, 2004, in Cannes, France describes that the portion of the Node B transmit power used by an ACK/NACK signal can be significant, it is also preferable to minimize the unnecessary transmission of an ACK/NACK signal. Unnecessary ACK/NACK signaling happens when a UE does not transmit an E-DCH packet in uplink, but the Node B does not know the absence of the uplink packet, and thus the Node B tries to decode the vacant frame and transmits a NACK to the UE. The detection of the absence/presence of the uplink packet relates to the uplink (E)TFCI transmission strategy. There are at least the following three options (which are discussed above):
Option 1) (E) TFCI indicating 'no data' is transmitted when there is no uplink packet transmission.
Option 2) (E) TFCI with a CRC is transmitted only when there is uplink packet transmission so that the Node B can detect the absence/presence of the uplink packet by checking the CRC checksum.
Option 3) (E) TFCI is transmitted only when there is uplink packet transmission so the Node B can detect the absence/presence of the uplink packet by energy detection without help from (E) TFCI.

With option 3, no additional energy is required in transmitting the (E) TFCI, but the probability of correct detection at Node B may be less because it is difficult to decide on an appropriate detection threshold when various TFC's are possible. Therefore, options (1) and (2) may be a preferable solution. Further, with option (2), the uplink interference and UE battery consumption is reduced with.

This invention may be conveniently implemented using a conventional general purpose digital computer or microprocessor programmed according to the teachings of the present specification, as well be apparent to those skilled in the computer art. Appropriate software coding can readily be prepared by skilled programmers based on the teachings of the present disclosure, as will be apparent to those skilled in the software art. The invention may also be implemented by the preparation of application specific integrated circuits or by interconnecting an appropriate network of conventional component circuits, as will be readily apparent to those skilled in the art.

The present invention includes a computer program product which is a storage medium including instructions which can be used to program a computer to perform a process of the invention. The storage medium can include, but is not limited to, any type of disk including floppy disks, optical discs, CD-ROMs, and magneto-optical disks, ROMs, RAMs, EPROMs, EEPROMs, magnetic or optical cards, or any type of media suitable for storing electronic instructions.

### Industrial Applicability

The present invention can be applicable to wireless communication systems.

## Claims

1. A method of receiving data in at least one Node B from a user equipment, hereinafter referred to as UE, in a mobile communication system, comprising:
receiving from the UE an error checksum along with a first Transport Format Combination Indicator, hereinafter referred to as TFCI, which indicates a transport format of data transmitted in a first radio frame on an enhanced dedicated channel, hereinafter referred to as E-DCH,
**characterized in that** the UE does not transmit any TFCI and error checksum to the at least one Node B when data is not transmitted in a second radio frame on the E-DCH, wherein the at least one Node B determines whether or not data exists in the second radio frame transmitted on the E-DCH by error processing the non-existent TFCI and error checksum associated with the second radio frame.

2. The method of claim 1, wherein the at least one Node B includes a plurality of Node Bs, and wherein the error checksum and the TFCI associated with the first radio frame is transmitted only when the UE is in a handover state with the plurality of Node Bs.

3. The method of claim 1, wherein the at least one Node B includes a plurality of Node Bs, and wherein the error checksum and the TFCI associated with the first radio frame is transmitted regardless of whether or not the UE is in a handover state with the plurality of Node Bs.

4. The method of claim 1, wherein the at least one Node B does not inform a Radio Network Controller, hereinafter referred to as RNC, controlling the at least one Node B that an error has occurred when determining no data exists in the second radio frame.

5. The method of claim 1, wherein the error checksum is a cyclic redundancy code , hereinafter referred to as CRC.

6. A Node B adapted to carry out a method in accordance with any one of claims 1-5.

## Patentansprüche

1. Verfahren zum Empfangen von Daten in wenigstens einem Knoten B von einem Anwendergerät, nachstehend als UE bezeichnet, in einem Mobilfunkkommunikationssystem, das umfasst:
Empfangen einer Fehlerprüfsumme von dem UE gemeinsam mit einem ersten Transportformatkombinationskennzeichen, nachstehend als TFCI bezeichnet, das ein Transportformat von Daten kennzeichnet, die in einem ersten Funkrahmen auf einem verbesserten dedizierten Kanal, nachstehend als E-DCH bezeichnet, übertragen werden,
**dadurch gekennzeichnet, dass** das UE kein TFCI oder keine Fehlerprüfsumme zu dem wenigstens einen Knoten B überträgt, wenn keine Daten in einem zweiten Funkrahmen auf dem E-DCH übertragen werden, wobei der wenigstens eine Knoten B durch Fehlerbehandlung für das nicht existierende TFCI und die nicht existierende Fehlerprüfsumme, die dem zweiten Funkrahmen zugeordnet ist, bestimmt, ob Daten, die auf dem E-DCH übertragen werden, in dem zweiten Funkrahmen existieren oder nicht.

2. Verfahren nach Anspruch 1, wobei der wenigstens eine Knoten B mehrere Knoten B umfasst und wobei die Fehlerprüfsumme und das TFCI, die dem ersten Funkrahmen zugeordnet sind, nur dann übertragen werden, wenn sich das UE mit den mehreren Knoten B in einem Übergabe-Zustand befindet.

3. Verfahren nach Anspruch 1, wobei der wenigstens eine Knoten B mehrere Knoten B umfasst und wobei die Fehlerprüfsumme und das TFCI, die dem ersten Funkrahmen zugeordnet sind, unabhängig davon übertragen werden, ob sich das UE mit den mehreren Knoten B in einem Übergabe-Zustand befindet oder nicht.

4. Verfahren nach Anspruch 1, wobei der wenigstens eine Knoten B eine Funknetzsteuereinheit, nachstehend als RNC bezeichnet, die den wenigstens einen Knoten B steuert, nicht informiert, dass ein Fehler aufgetreten ist, wenn er feststellt, dass keine Daten in dem zweiten Funkrahmen existieren.

5. Verfahren nach Anspruch 1, wobei die Fehlerprüfsumme ein zyklischer Redundanzcode ist, nachstehend als CRC bezeichnet.

6. Knoten B, der ausgelegt ist, um ein Verfahren nach einem der Ansprüche 1-5 auszuführen.

## Revendications

1. Procédé de réception de données dans au moins un noeud B à partir d'un équipement d'utilisateur, UE, dans un système de communication mobile, comprenant :
la réception, à partir de l'UE, d'une somme de contrôle d'erreur avec un premier indicateur de combinaison de format de transport, TFCI, qui indique un format de transport de données transmises dans une première trame radio sur une première voie dédiée améliorée, E-DCH,
**caractérisé en ce que** l'UE ne transmet pas de TFCI et de somme de contrôle d'erreur à l'au moins un noeud B lorsque des données ne sont pas transmises dans une deuxième trame radio sur l'E-DCH, dans lequel l'au moins un noeud B détermine s'il existe ou pas des données dans la deuxième trame radio transmise sur l'E-DCH par traitement d'erreur du TFCI et de la somme de contrôle d'erreur non existants associés à la deuxième trame radio.

2. Procédé selon la revendication 1, dans lequel l'au moins un noeud B comprend une pluralité de noeuds B, et dans lequel la somme de contrôle d'erreur et le TFCI associés à la première trame radio ne sont transmis que lorsque l'UE se trouve dans un état de transfert avec la pluralité de noeuds B.

3. Procédé selon la revendication 1, dans lequel l'au moins un noeud B comprend une pluralité de noeuds B, et dans lequel la somme de contrôle d'erreur et le TFCI associés à la première trame radio sont transmis que l'UE se trouve ou pas dans un état de transfert avec la pluralité de noeuds B.

4. Procédé selon la revendication 1, dans lequel l'au moins un noeud B n'informe pas un contrôleur de réseau radio, RNC, commandant l'au moins un noeud B qu'une erreur s'est produite lors de la détermination qu'il n'existe pas de données dans la deuxième trame radio.

5. Procédé selon la revendication 1, dans lequel la somme de contrôle d'erreur est un code de redondance cyclique, CRC.

6. Noeud B apte à effectuer un procédé selon l'une quelconque des revendications 1 à 5.
